# EUROPEAN PATENT APPLICATION

(11) **EP 4 443 738 A1**
(43) Date of publication of application: **09.10.2024**
(21) Application number: 24160848.8
(22) Date of filing: 01.03.2024
(51) Int. Cl.: H02P 23/20, B60L 50/20, B62M 6/45, H02P 27/08

(54) **DRIVING DEVICE AND DRIVING METHOD FOR DRIVING MOTOR OF ELECTRIC AUXILIARY VEHICLE**

(30) Priority: 21.03.2023 TW 112110513
(71) Applicant: APh ePower Co., Ltd., Kaohsiung City 821 (TW)
(72) Inventor: SU, Hsiu-Hsien, 821 Kaohsiung City (TW); HUANG, Kuan-Chieh, 821 Kaohsiung City (TW); TZENG, Yun-Chi, 821 Kaohsiung City (TW)
(74) Representative: Becker, Eberhard

(57) **Abstract**

A driving device (100, 200) and a driving method for driving a motor (MTR) of an electric auxiliary vehicle (10, 20) are provided. The driving device (100, 200) includes a battery module (110), a transducer (120), a control circuit (130, 230). The battery module (110) stores a driving power (PDR). When an acceleration command (IT1) is received, the control circuit (130, 230) controls the transducer (120) to enter a first mode. In the first mode, the transducer (120) provides the driving power (PDR) to the motor (MTR). When a brake command (IT2) is received, the control circuit (130, 230) controls the transducer (120) to enter a second mode. In the second mode, the transducer (120) provides an inductive power (PSE, EA, EB, EC, EAB) generated by the motor (MTR) to the battery module (110). When the acceleration and brake commands (IT1, IT2) are not received and a user does not apply an acceleration force to the electric auxiliary vehicle (10, 20), the control circuit (130, 230) controls the transducer (120) to enter a third mode. In the third mode, the transducer (120) provides the inductive power (PSE, EA, EB, EC, EAB) to the battery module (110).

## Description

### BACKGROUND OF THE INVENTION

### Field of the Invention

The invention relates to a driving device and a driving method, and in particular to a driving device and a driving method for driving a motor of an electric auxiliary vehicle.

### Description of Related Art

Current electric auxiliary vehicles (such as electric walkers, electric auxiliary bicycles, etc.) recharge the power of the motor to the power source terminal during the braking phase. However, the above operation may only recover power during the braking phase and when the user exerts a force (such as thrust or pedaling force). Current electric auxiliary vehicles are unable to recover power during the braking phase and other phases other than the user exerting force when traveling. Therefore, when the user does not apply an acceleration force to the electric auxiliary vehicle, the mileage of the electric auxiliary vehicle is limited.

### SUMMARY OF THE INVENTION

The invention provides a driving device and a driving method for driving a motor of an electric auxiliary vehicle that may increase the mileage of the electric auxiliary vehicle.

A driving device of the invention is used to drive a motor of an electric auxiliary vehicle. The driving device includes a battery module, a transducer, and a control circuit. The battery module stores a driving power. The transducer is coupled to the battery module and the motor. The control circuit is coupled to the transducer. When an acceleration command is received, the control circuit controls the transducer to enter a first mode so that the transducer provides the driving power to the motor in the first mode. When a brake command is received, the control circuit controls the transducer to enter a second mode so that the transducer provides an inductive power generated by the motor to the battery module in the second mode. When the acceleration command and the brake command are not received and a user does not apply an acceleration force to the electric auxiliary vehicle, the control circuit controls the transducer to enter a third mode so that the transducer provides the inductive power generated by the motor to the battery module in the third mode.

A driving method of the invention is used to drive an electric auxiliary vehicle. The electric auxiliary vehicle includes a motor, a battery module, and a transducer. The battery module stores a driving power. The driving method includes: starting the electric auxiliary vehicle; determining a received command; controlling the transducer to enter a first mode when an acceleration command is received, so that the transducer provides the driving power to the motor in the first mode; controlling the transducer to enter a second mode when a brake command is received, so that the transducer provides an inductive power generated by the motor to the battery module in the second mode; and controlling the transducer to enter a third mode when the acceleration command and the brake command are not received and a user does not apply an acceleration force to the electric auxiliary vehicle, so that the transducer provides the inductive power generated by the motor to the battery module in the third mode.

Based on the above, when the brake command is received, the transducer provides the inductive power generated by the motor to the battery module in the second mode, thereby charging the battery module. When the acceleration command and the brake command are not received, the transducer provides the inductive power generated by the motor to the battery module in the third mode, thereby charging the battery module. In other words, the battery module may be charged in both the second mode and the third mode. In this way, the mileage of the electric auxiliary vehicle may be increased.

In order to make the aforementioned features and advantages of the disclosure more comprehensible, embodiments accompanied with figures are described in detail below.

### BRIEF DESCRIPTION OF THE DRAWINGS

FIG. 1 is a block diagram of an electric auxiliary vehicle shown according to the first embodiment of the invention.
FIG. 2 is a flowchart of a driving method shown according to an embodiment of the invention.
FIG. 3 is an equivalent schematic diagram of a driving device and a motor shown according to an embodiment of the invention.
FIG. 4 is a schematic diagram of operation of the first mode shown according to an embodiment of the invention.
FIG. 5 is a schematic diagram of operation of the second mode shown according to an embodiment of the invention.
FIG. 6 is a schematic diagram of operation of the third mode shown according to an embodiment of the invention.
FIG. 7 is a block diagram of an electric auxiliary vehicle shown according to the second embodiment of the invention.
FIG. 8A and FIG. 8B are flowcharts of the driving method shown in FIG. 7.

### DESCRIPTION OF THE EMBODIMENTS

A portion of the embodiments of the invention is described in detail hereinafter with reference to figures. In the following, the same reference numerals in different figures should be considered to represent the same or similar elements. The embodiments are only a part of the invention, and do not disclose all possible implementation modes of the invention. Rather, the embodiments are merely examples within the scope of the invention.

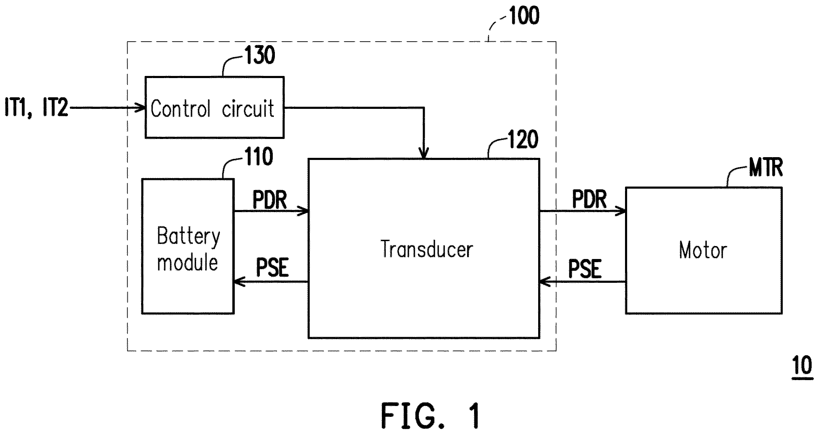

Referring to FIG. 1, FIG. 1 is a block diagram of an electric auxiliary vehicle shown according to the first embodiment of the invention. An electric auxiliary vehicle 10 may be, for example, a vehicle such as an electric walker or an electric auxiliary bicycle. In the present embodiment, the electric auxiliary vehicle 10 includes a driving device 100 and a motor MTR. The driving device 100 is used to drive the motor MTR. The motor MTR of the present embodiment may be, for example, a brushless DC (BLDC) motor, but the invention is not limited to the motor of the present embodiment. The motor MTR may drive a tire of the electric auxiliary vehicle 10. Therefore, the electric auxiliary vehicle 10 may travel based on the rotation of the motor MTR.

In the present embodiment, the driving device 100 includes a battery module 110, a transducer 120, and a control circuit 130. The battery module 110 stores a driving power PDR. In the present embodiment, the battery module 110 is an aluminum-ion battery. The aluminum-ion battery has a high charge and discharge rate (C-rate). Therefore, the battery module 110 may achieve the benefit of fast charging.

The transducer 120 is coupled to the battery module 110 and the motor MTR. The control circuit 130 is coupled to the transducer 120. The control circuit 130 controls the transducer 120 based on the received command. In the present embodiment, when an acceleration command IT1 is received, the control circuit 130 controls the transducer 120 to enter the first mode. In the first mode, the transducer 120 provides the driving power PDR to the motor MTR. Therefore, the moving speed of the electric auxiliary vehicle 10 may be increased.

When a brake command IT2 is received, the control circuit 130 controls the transducer 120 to enter the second mode. In the second mode, the transducer 120 reduces the rotation speed of the motor MTR. The transducer 120 provides an inductive power PSE generated by the motor MTR to the battery module 110. In the present embodiment, the acceleration command IT1 and the brake command IT2 may be provided by the user's operation of the electric auxiliary vehicle 10.

In addition, when the acceleration command IT1 and the brake command IT2 are not received and the user does not apply an acceleration force to the electric auxiliary vehicle 10, the electric auxiliary vehicle 10 is naturally decelerated. The control circuit 130 controls the transducer 120 to enter the third mode. In the third mode, the transducer 120 provides the inductive power PSE generated by the motor MTR to the battery module 110.

It should be mentioned here that, when the brake command IT2 is received, the transducer 120 provides the inductive power PSE generated by the motor MTR to the battery module 110 in the second mode, thereby charging the battery module 110. When the acceleration command IT1 and the brake command IT2 are not received and the user does not apply an acceleration force to the electric auxiliary vehicle 10, the transducer 120 also provides the inductive power PSE generated by the motor MTR to the battery module 110 in the third mode, thereby charging the battery module 110. In other words, the battery module 110 may be charged even when the electric auxiliary vehicle 10 is naturally decelerating or braking. The charging time of the battery module 110 is increased. In this way, the mileage of the electric auxiliary vehicle 10 may be increased.

In the present embodiment, the control circuit 130 is, for example, a central processing unit (CPU), or other programmable general-purpose or special-purpose microprocessor, digital signal processor (DSP), programmable controller, application-specific integrated circuit (ASIC), programmable logic device (PLD), or other similar devices, or a combination of the devices that may load and execute a computer program.

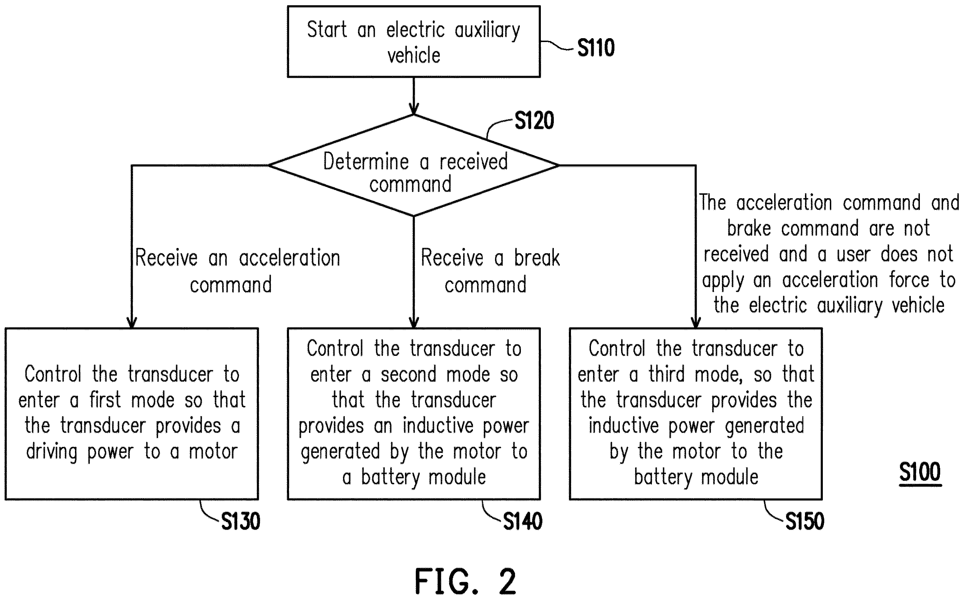

Please refer to FIG. 1 and FIG. 2 at the same time. FIG. 2 is a flowchart of a driving method shown according to an embodiment of the invention. A driving method 5100 is adapted to drive the electric auxiliary vehicle 10. In the present embodiment, the driving method S100 includes steps S110 to S150. In step S110, the electric auxiliary vehicle 10 is started. In step S120, the control circuit 130 determines the received command. In step S120, when the acceleration command IT1 is received, the control circuit 130 controls the transducer 120 to enter the first mode in step S130. Therefore, the transducer 120 provides the driving power PDR to the motor MTR.

In step S120, when the brake command IT2 is received, the control circuit 130 controls the transducer 120 to enter the second mode in step S140. Therefore, the transducer 120 provides the inductive power PSE generated by the motor MTR to the battery module 110. In step S120, when the acceleration command IT1 and the brake command IT2 are not received and the user does not apply an acceleration force to the electric auxiliary vehicle 10, the control circuit 130 controls the transducer 120 to enter the third mode in step S150. Therefore, the transducer 120 provides the inductive power PSE generated by the motor MTR to the battery module 110.

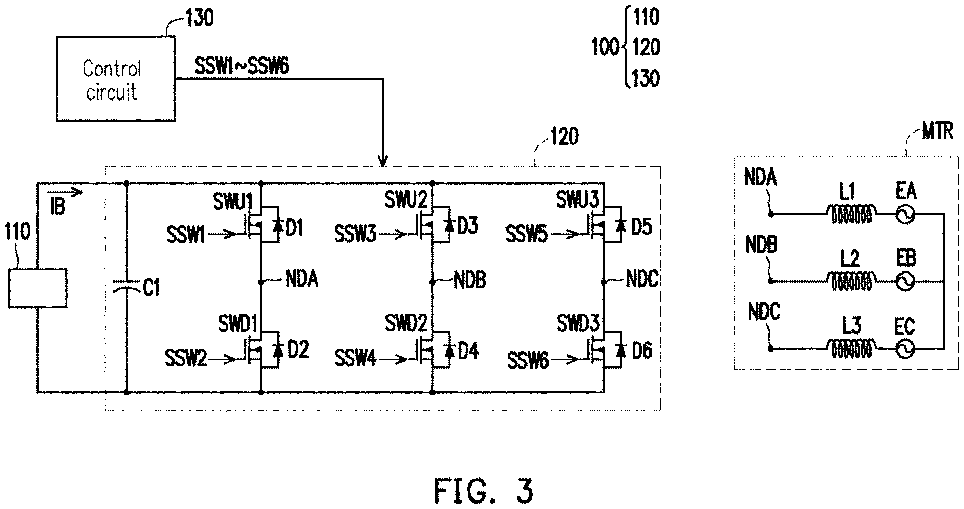

Referring to FIG. 3, FIG. 3 is an equivalent schematic diagram of a driving device and a motor shown according to an embodiment of the invention. In the present embodiment, FIG. 3 shows the equivalent circuit of the motor MTR. The motor MTR includes equivalent inductors L1 to L3. The equivalent inductors L1 to L3 respectively correspond to one of the equivalent elements of the three-phase coil of the motor MTR. The motor MTR has phase nodes NDA to NDC. The equivalent inductor L1 has an inductive power EA. The equivalent inductor L2 has an inductive power EB. The equivalent inductor L3 has an inductive power EC.

In the present embodiment, the control circuit 130 provides switch signals SSW1 to SSW6 for controlling the transducer 120. The transducer 120 includes a capacitor C1, upper arm power switches SWU1 to SWU3, lower arm power switches SWD1 to SWD3, and bypass diodes D1 to D6. The first terminal of the upper arm power switch SWU1 is coupled to the positive electrode of the battery module 110. The second terminal of the upper arm power switch SWU1 is coupled to the phase node NDA. The control terminal of the upper arm power switch SWU1 receives the switch signal SSW1. The first terminal of the lower arm power switch SWD1 is coupled to the phase node NDA. The second terminal of the lower arm power switch SWD1 is coupled to the negative electrode of the battery module 110. The control terminal of the lower arm power switch SWD1 receives the switch signal SSW2.

The first terminal of the upper arm power switch SWU2 is coupled to the positive electrode of the battery module 110. The second terminal of the upper arm power switch SWU2 is coupled to the phase node NDB. The control terminal of the upper arm power switch SWU2 receives the switch signal SSW3. The first terminal of the lower arm power switch SWD2 is coupled to the phase node NDB. The second terminal of the lower arm power switch SWD2 is coupled to the negative electrode of the battery module 110. The control terminal of the lower arm power switch SWD2 receives the switch signal SSW4.

The first terminal of the upper arm power switch SWU3 is coupled to the positive electrode of the battery module 110. The second terminal of the upper arm power switch SWU3 is coupled to the phase node NDC. The control terminal of the upper arm power switch SWU3 receives the switch signal SSW5. The first terminal of the lower arm power switch SWD3 is coupled to the phase node NDC. The second terminal of the lower arm power switch SWD3 is coupled to the negative electrode of the battery module 110. The control terminal of the lower arm power switch SWD3 receives the switch signal SSW6.

The cathode of the bypass diode D1 is coupled to the first terminal of the upper arm power switch SWU1. The anode of the bypass diode D1 is coupled to the second terminal of the upper arm power switch SWU1. The cathode of the bypass diode D2 is coupled to the first terminal of the upper arm power switch SWU2. The anode of the bypass diode D2 is coupled to the second terminal of the upper arm power switch SWU2. The cathode of the bypass diode D3 is coupled to the first terminal of the upper arm power switch SWU2. The anode of the bypass diode D3 is coupled to the second terminal of the upper arm power switch SWU2. The cathode of the bypass diode D4 is coupled to the first terminal of the upper arm power switch SWD2. The anode of the bypass diode D4 is coupled to the second terminal of the upper arm power switch SWD2. The cathode of the bypass diode D5 is coupled to the first terminal of the upper arm power switch SWU3. The anode of the bypass diode D5 is coupled to the second terminal of the upper arm power switch SWU3. The cathode of the bypass diode D6 is coupled to the first terminal of the upper arm power switch SWD3. The anode of the bypass diode D6 is coupled to the second terminal of the upper arm power switch SWD3.

In the present embodiment, the upper arm power switches SWU1 to SWU3 and the lower arm power switches SWD1 to SWD3 are implemented by N-type field-effect transistors (FETs) respectively. The upper arm power switches SWU1 to SWU3 and the lower arm power switches SWD1 to SWD3 are respectively implemented by N-type MOSFETs. The bypass diodes D1 to D6 may be disposed in the upper arm power switches SWU1 to SWU3 and the lower arm power switches SWD1 to SWD3 respectively. In some embodiments, the upper arm power switches SWU1 to SWU3 and the lower arm power switches SWD1 to SWD3 are respectively implemented by NPN bipolar transistors (BJT).

The implementation details of the transducer 120 in different modes are described below with examples.

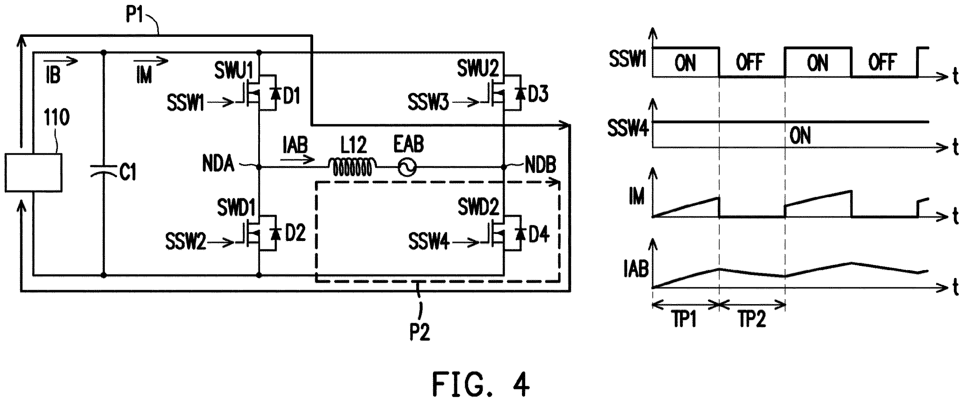

Please refer to FIG. 3 and FIG. 4 simultaneously. FIG. 4 is a schematic diagram of operation of the first mode shown according to an embodiment of the invention. FIG. 4 shows a schematic diagram of operation of the first mode associated with the phase nodes NDA and NDB. In the present embodiment, there is an equivalent inductor L12 between the phase nodes NDA and NDB. The equivalent inductor L12 has an inductive power EAB. The equivalent inductor L12 may be a series equivalent inductor of the equivalent inductors L1 and L2 of FIG. 3.

In the first mode, the upper arm power switch SWU1 performs a switch operation based on the duty cycle of the switch signal SSW1. The upper arm power switch SWU2 and the lower arm power switch SWD1 remain turned off. The lower arm power switch SWD2 remains turned on. For example, the lower arm power switch SWD1 remains turned off based on the low voltage level of the switch signal SSW2. The upper arm power switch SWU2 remains turned off based on the low voltage level of the switch signal SSW3. The lower arm power switch SWD2 remains turned on (marked as `ON') based on the high voltage level of the switch signal SSW4.

During a period TP1 when the upper arm power switch SWU1 is turned on (marked as 'ON'), the upper arm power switch SWU1, the equivalent inductor L12, and the lower arm power switch SWD2 form a transmission path P1 for transmitting the driving power PDR. The transmission path P1 is an excitation circuit. Therefore, during the period TP1, an exciting current IM is gradually increased. The current value of a current IAB flowing through the equivalent inductor L12 is also gradually increased.

During a period TP2 when the upper arm power switch SWU1 is turned off (marked as 'OFF'), the equivalent inductor L12, the lower arm power switch SWD2, and the bypass diode D2 form a transmission path P2 for transmitting the inductive power EAB provided by the equivalent inductor L12. The exciting current IM is not generated. Therefore, during the period TP2, the current value of the current IAB flowing through the equivalent inductor L12 is not increased. Therefore, the greater the duty cycle of the switch signal SSW1, the greater the current value of the current IAB flowing through the equivalent inductor L12 is increased. It may be seen that in the first mode, the duty cycle of the switch signal SSW1 may determine the output size of the motor MTR.

In the present embodiment, the switch signal SSW1 may be a pulse-width modulation (PWM) signal in the first mode. The wider the pulse width of the switch signal SSW1, the greater the output of the motor MTR. The narrower the pulse width of the switch signal SSW1, the less the output of the motor MTR.

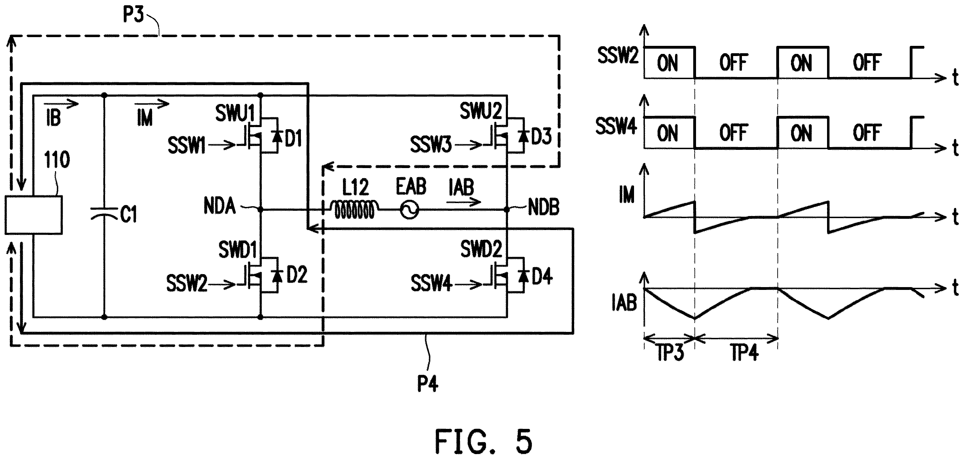

Please refer to FIG. 3 and FIG. 5 simultaneously. FIG. 5 is a schematic diagram of operation of the second mode shown according to an embodiment of the invention. FIG. 5 shows a schematic diagram of operation of the second mode associated with the phase nodes NDA and NDB. In the second mode, the upper arm power switch SWU1 remains turned off. The lower arm power switch SWD1 performs a switch operation based on the duty cycle of the switch signal SSW2. The upper arm power switch SWU2 performs a switch operation based on the duty cycle of the switch signal SSW3. The lower arm power switch SWD2 remains turned off. The switch signal SSW3 is the same as the switch signal SSW2. The switch signals SSW2 and SSW3 may respectively be PWM signals in the second mode.

During a period TP3 when the lower arm power switch SWD1 and the upper arm power switch SWU2 are turned on (marked as 'ON'), the upper arm power switch SWU2, the equivalent inductor L12, and the lower arm power switch SWD1 form a transmission path P3 for transmitting the reverse phase excitation power of the equivalent inductor L12. The current value of the exciting current IM is gradually increased. The current value of the current IAB flowing through the equivalent inductor L12 is gradually increased. It should be noted that the direction of the transmission path P3 located at the equivalent inductor L12 is opposite to the direction of the transmission path P1 (see FIG. 4) located at the equivalent inductor L12. In other words, the current IAB flowing through the equivalent inductor L12 in the second mode is opposite to the current IAB flowing through the equivalent inductor L12 in the first mode. Therefore, the reverse phase excitation power (e.g., the inductive power EAB) resists the kinetic energy generated by the motor MTR in the first mode. Therefore, in the second mode, during the period TP3 when the lower arm power switch SWD1 and the upper arm power switch SWU2 are turned on, the electric auxiliary vehicle brakes.

During a period TP4 when the lower arm power switch SWD1 and the upper arm power switch SWU2 are turned off (marked as 'OFF'), the equivalent inductor L12 and the bypass diodes D1 and D3 form a transmission path P4 for transmitting the inductive power EAB provided by the equivalent inductor L12. The direction of the exciting current IM of the transmission path P4 is opposite to the direction of the exciting current IM of the transmission path P3. In addition, the current value of the exciting current IM is gradually decreased to 0. It should be noted that the inductive power EAB flows back to the battery module 110 via the transmission path P4. Therefore, during the period TP4, the battery module 110 is charged.

In addition, during the period TP4, the current value of the current IAB flowing through the equivalent inductor L12 is gradually decreased to 0. The area formed by the current value of the current IAB during the period TP3 and a time t is related to the power consumed in the second mode. The area formed by the current value of the current IAB during the period TP4 and the time t is related to the power recovered in the second mode. The area formed by the current value of the current IAB and time during the period TP4 is greater than or equal to the area formed by the current value of the current IAB and time during the period TP3. Therefore, the power recovered in the second mode is greater than or equal to the power consumed in the second mode. In other words, in the second mode, the battery module 110 does not actually consume the driving power PDR.

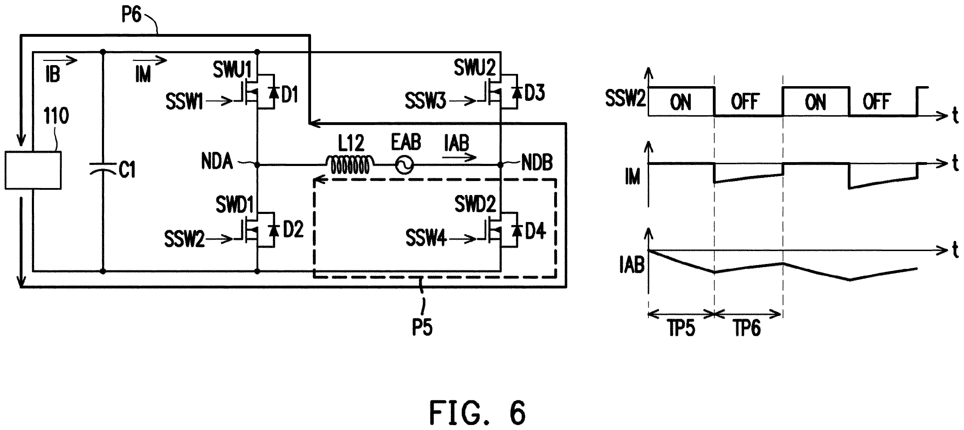

Please refer to FIG. 3 and FIG. 6 simultaneously. FIG. 6 is a schematic diagram of operation of the third mode shown according to an embodiment of the invention. FIG. 6 shows a schematic diagram of operation of the third mode associated with the phase nodes NDA and NDB. In the third mode, the upper arm power switches SWU1 and SWU2 and the lower arm power switch SWD2 remain turned off. The lower arm power switch SWD1 performs a switch operation based on the duty cycle of the second switch signal SSW2.

During a period TP5 when the lower arm power switch SWD1 is turned on (marked as 'ON'), the lower arm power switch SWD1, the equivalent inductor L12, and the bypass diode D4 form a transmission path P5 for transmitting the inductive power EAB provided by the equivalent inductor L12. During a period TP6 when the lower arm power switch SWD1 is turned off (marked as `OFF'), the equivalent inductor L12 and the bypass diodes D1 and D4 form a transmission path P6 for transmitting the inductive power EAB. The transmission path P6 is the same as the transmission path P4. Therefore, during the period TP6, the battery module 110 is charged.

During the period when the transducer 120 enters the third mode (i.e., the periods TP5 and TP6), an electric auxiliary vehicle 20 allows the user to apply an acceleration force. Therefore, the inductive power EAB may be increased. As the inductive power EAB is increased, the current value of the current IAB flowing through the equivalent inductor L12 is also increased. Therefore, during the period TP6, when the electric auxiliary vehicle 20 obtains an acceleration force, the transducer 120 charges the battery module 110 using sufficient inductive power EAB.

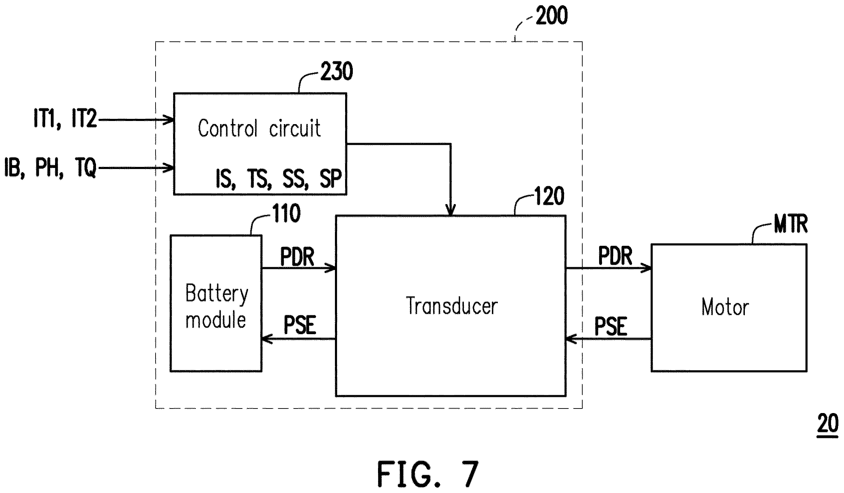

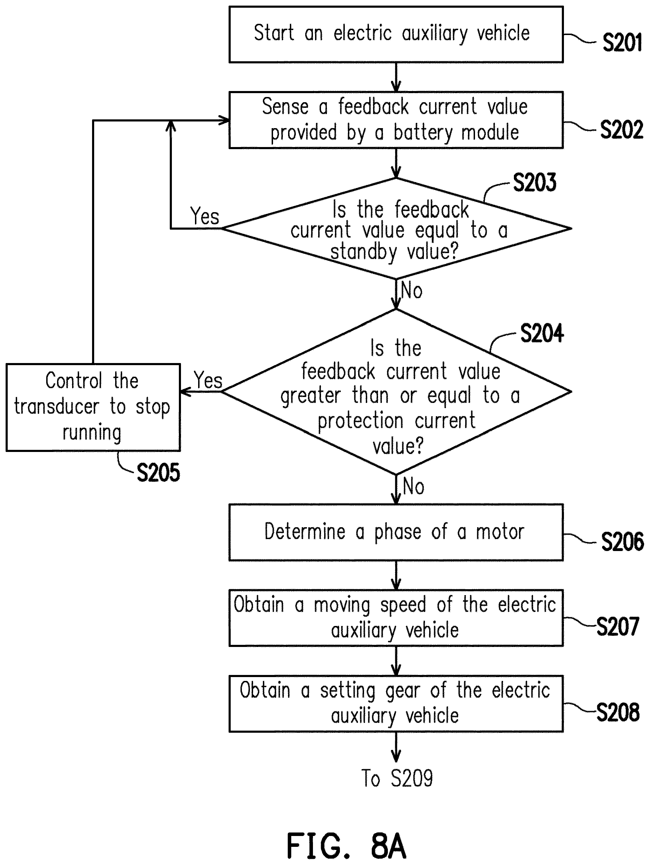

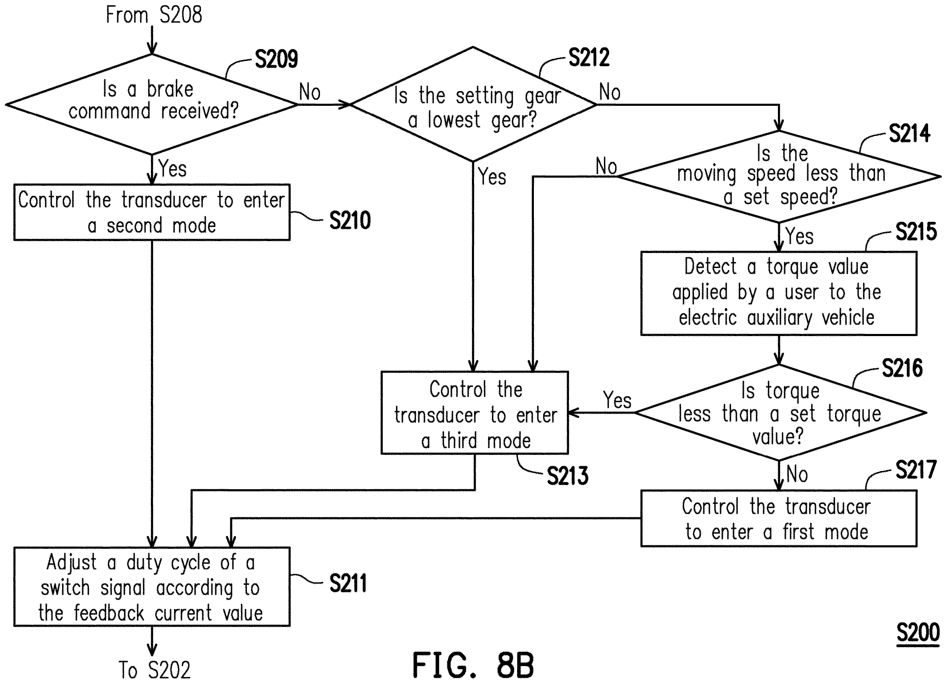

Please refer to FIG. 3, FIG. 7, FIG. 8A, and FIG. 8B at the same time. FIG. 7 is a block diagram of an electric auxiliary vehicle shown according to the second embodiment of the invention. FIG. 8A and FIG. 8B are flowcharts of the driving method shown in FIG. 7. In the present embodiment, the electric auxiliary vehicle 20 includes a driving device 200 and the motor MTR. The driving device 200 is used to drive the motor MTR.

In the present embodiment, the driving device 200 includes the battery module 110, the transducer 120, and a control circuit 230. The battery module 110 stores the driving power PDR. In the present embodiment, the battery module 110 is an aluminum-ion battery. Therefore, the battery module 110 may achieve the benefit of fast charging. The transducer 120 is coupled to the battery module 110 and the motor MTR. The control circuit 230 is coupled to the transducer 120. The control circuit 230 controls the transducer 120 based on the received command or the current usage status of the electric auxiliary vehicle 20. The circuit of the transducer 120 is shown in FIG. 3 and therefore not repeated here.

In the present embodiment, a driving method S200 is adapted to drive the electric auxiliary vehicle 20. In the present embodiment, the driving method S200 includes steps S201 to S217. In step S201, the electric auxiliary vehicle 20 is started. In step S202, the control circuit 230 senses a feedback current value IB provided by the battery module 110. In the present embodiment, the feedback current value IB is related to the current value of the driving power PDR provided by the battery module 110. In step S203, the control circuit 230 determines whether the feedback current value IB is equal to the standby value. When the feedback current value IB is equal to the standby value, the electric auxiliary vehicle 20 is in a standby state and is not yet started traveling. Therefore, the control circuit 230 returns to the operation of step S202.

In step S203, when the feedback current value IB is not equal to the standby value, the control circuit 230 determines whether the feedback current value IB is greater than or equal to a protection current value IS in step S204. When the feedback current value IB is greater than or equal to the protection current value IS, an abnormality may occur in the driving device 200. Therefore, the control circuit 230 controls the transducer 120 to stop running in step S205. In step S205, the control circuit 230 turns off the upper arm power switches SWU1 to SWU3 and the lower arm power switches SWD1 to SWD3.

Moreover, in step S204, when the feedback current value IB is less than the protection current value IS, the driving device 200 is running normally. Therefore, the control circuit 230 determines the phase change of the motor MTR in step S206. In step S206, the electric auxiliary vehicle 20 may sense a phase change PH of the motor MTR.

For example, the electric auxiliary vehicle 20 includes a Hall sensor (not shown). The Hall sensor senses the phase change PH of the motor MTR. When the Hall sensor may not sense the phase change PH of the motor MTR, the electric auxiliary vehicle 20 performs a phase test of the motor MTR. The electric auxiliary vehicle 20 performs the phase test of the motor MTR using, for example, a six-step square-wave.

In step S207, the control circuit 230 obtains a moving speed SP of the electric auxiliary vehicle 20 according to the phase change PH. In step S208, the control circuit 230 obtains the setting gear of the electric auxiliary vehicle 20. For example, the user may determine the setting gear of the electric auxiliary vehicle 20. The higher the setting gear, the greater the auxiliary force the electric auxiliary vehicle 20 provides. The lower the setting gear, the less the auxiliary force the electric auxiliary vehicle 20 provides. In the lowest gear, the electric auxiliary vehicle 20 does not provide an auxiliary force.

In step S209, the control circuit 230 determines whether the brake command IT2 is received. When the brake command IT2 is received, the control circuit 230 controls the transducer 120 to enter the second mode in step S210. The cooperative implementation of the transducer 120 and the control circuit 230 in the second mode may be clearly explained in the embodiments of FIG. 1 and FIG. 5, and is therefore not repeated here.

In step S211, the control circuit 230 adjusts the duty cycles of the switch signals SSW1 to SSW6 according to the feedback current value IB. Taking the phase nodes NDA and NDB as an example, in the second mode, when the feedback current value IB is less than the rated value of the second mode, the control circuit 230 increases the duty cycles of the switch signals SSW2 and SSW3. Moreover, when the feedback current value IB is greater than the rated value of the second mode, the control circuit 230 decreases the duty cycles of the switch signals SSW2 and SSW3. After step S211, the control circuit 230 returns to the operation of step S202.

Please return to step S209. When the brake command IT2 is not received, the control circuit 230 determines whether the current setting gear is the lowest gear in step S212. When the setting gear is the lowest gear, the electric auxiliary vehicle 20 does not provide an auxiliary force. Therefore, the electric auxiliary vehicle 20 naturally decelerates and charges the battery module 110. The control circuit 230 controls the transducer 120 to enter the third mode in step S213. Therefore, the electric auxiliary vehicle 20 naturally decelerates without providing an auxiliary force and charges the battery module 110. The cooperative implementation of the transducer 120 and the control circuit 230 in the third mode may be clearly explained in the embodiments of FIG. 1 and FIG. 6, and is therefore not repeated here.

Next, the control circuit 230 adjusts the duty cycles of the switch signals SSW1 to SSW6 according to the feedback current value IB in step S211. Taking the phase nodes NDA and NDB as an example, in the second mode, when the feedback current value IB is less than the rated value of the third mode, the control circuit 230 increases the duty cycle of the switch signal SSW2. Moreover, when the feedback current value IB is greater than the rated value of the third mode, the control circuit 230 decreases the duty cycle of the switch signal SSW2. After step S211, the control circuit 230 returns to the operation of step S202.

Please return to step S212. When the setting gear is not the lowest gear, the control circuit 230 determines in step S214 whether the moving speed SP of the electric auxiliary vehicle 20 is less than a set speed SS. The set speed SS is, for example, the highest standard speed of the electric auxiliary vehicle 20 (for example, 25 kilometers per hour, the invention is not limited thereto). When the moving speed SP is greater than or equal to the set speed SS, the moving speed SP is higher than the maximum specification speed. The control circuit 230 controls the transducer 120 to enter the third mode in step S213. Therefore, the electric auxiliary vehicle 20 naturally decelerates without providing an auxiliary force and charges the battery module 110. The control circuit 230 performs the operation of step S211 in the third mode. After step S211, the control circuit 230 returns to the operation of step S202.

When the moving speed SP is less than the set speed SS, the control circuit 230 detects a torque value TQ applied by the user to the electric auxiliary vehicle 20 in step S215. For example, the electric auxiliary vehicle 20 is an electric auxiliary bicycle. The control circuit 230 detects the torque value TQ applied by the user to the crank of the electric auxiliary vehicle 20 in step S215. In step S216, the control circuit 230 determines whether the torque value TQ is less than a set torque value TS. When the torque value TQ is less than the set torque value TS, the user has a need to decelerate. Therefore, the electric auxiliary vehicle 20 naturally decelerates without providing an auxiliary force and charges the battery module 110. The control circuit 230 performs the operation of step S211 in the third mode.

Moreover, when the torque value TQ is greater than or equal to the set torque value TS, the user has a need for acceleration. Therefore, the control circuit 230 controls the transducer 120 to enter the first mode in step S217 to reduce the user's burden. The control circuit 230 performs the operation of step S211 in the first mode. Taking the phase nodes NDA and NDB as an example, in the first mode, when the feedback current value IB is less than the rated value of the first mode, the control circuit 230 increases the duty cycle of the switch signal SSW2. Moreover, when the feedback current value IB is greater than the rated value of the first mode, the control circuit 230 decreases the duty cycle of the switch signal SSW2. After step S211, the control circuit 230 returns to the operation of step S202.

It should be noted that the control circuit 230 actively controls the transducer 120 to enter the third mode according to the determination of at least one of the setting gear, the moving speed SP, and the torque value TQ (e.g., at least one of steps S212, S214, and S216). Therefore, the opportunity of the transducer 120 to provide the inductive power PSE generated by the motor MTR to the battery module 110 is significantly increased.

In some embodiments, when the electric auxiliary vehicle 20 does not have a control method of the setting gear, steps S208 and S212 may be omitted. In some embodiments, if the electric auxiliary vehicle 20 is a vehicle other than an electric auxiliary bicycle, steps S215 and S216 may be omitted.

Based on the above, when the brake command is received, the transducer provides the inductive power generated by the motor to the battery module in the second mode, thereby charging the battery module. When the acceleration command and the brake command are not received, the transducer provides the inductive power generated by the motor to the battery module in the third mode, thereby charging the battery module. In other words, the battery module may be charged in both the second mode and the third mode. In this way, the mileage of the electric auxiliary vehicle may be increased. In addition, the battery module is an aluminum-ion battery. The aluminum-ion battery has a high charge and discharge rate. Therefore, the battery module may achieve the benefit of fast charging.

## Claims

1. A driving device (100, 200) for driving a motor (MTR) of an electric auxiliary vehicle (10, 20), comprising:
a battery module (110) configured to store a driving power (PDR);
a transducer (120) coupled to the battery module (110) and the motor (MTR); and
a control circuit (130, 230) coupled to the transducer (120) and configured to:
control the transducer (120) to enter a first mode when an acceleration command (IT1) is received, so that the transducer (120) provides the driving power (PDR) to the motor (MTR) in the first mode,
control the transducer (120) to enter a second mode when a brake command (IT2) is received, so that the transducer (120) provides an inductive power (PSE, EA, EB, EC, EAB) generated by the motor (MTR) to the battery module (110) in the second mode, and
control the transducer (120) to enter a third mode when the acceleration command (IT1) and the brake command (IT2) are not received and a user does not apply an acceleration force to the electric auxiliary vehicle (10, 20), so that the transducer (120) provides the inductive power (PSE, EA, EB, EC, EAB) generated by the motor (MTR) to the battery module (110) in the third mode.

2. The driving device (100, 200) of claim 1, wherein the battery module (110) is an aluminum-ion battery.

3. The driving device (100, 200) of claim 1, wherein the motor (MTR) has a first phase node and a second phase node, the control circuit (130, 230) provides a first switch signal, a second switch signal (SSW2), a third switch signal, and a fourth switch signal, and the transducer (120) comprises:
a first upper arm power switch, wherein a first terminal of the first upper arm power switch is coupled to a positive electrode of the battery module (110), a second terminal of the first upper arm power switch is coupled to the first phase node, and a control terminal of the first upper arm power switch receives the first switch signal;
a first lower arm power switch, wherein a first terminal of the first lower arm power switch is coupled to the first phase node, a second terminal of the first lower arm power switch is coupled to a negative electrode of the battery module (110), and a control terminal of the first lower arm power switch receives the second switch signal (SSW2);
a second upper arm power switch, wherein a first terminal of the second upper arm power switch is coupled to the positive electrode of the battery module (110), a second terminal of the second upper arm power switch is coupled to the second phase node, and a control terminal of the second upper arm power switch receives the third switch signal;
a second lower arm power switch, wherein a first terminal of the second lower arm power switch is coupled to the second phase node, a second terminal of the second lower arm power switch is coupled to the negative electrode of the battery module (110), and a control terminal of the second lower arm power switch receives the fourth switch signal;
a first bypass diode, wherein a cathode of the first bypass diode is coupled to the first terminal of the first upper arm power switch, and an anode of the first bypass diode is coupled to the second terminal of the first upper arm power switch;
a second bypass diode, wherein a cathode of the second bypass diode is coupled to the first terminal of the first lower arm power switch, and an anode of the second bypass diode is coupled to the second terminal of the first lower arm power switch; and
a third bypass diode, wherein a cathode of the third bypass diode is coupled to the first terminal of the second lower arm power switch, and an anode of the third bypass diode is coupled to the second terminal of the second lower arm power switch.

4. The driving device (100, 200) of claim 3, wherein in the first mode:
the first upper arm power switch performs a switch operation based on a duty cycle of the first switch signal,
the first lower arm power switch remains turned off,
the second upper arm power switch remains turned off, and
the second lower arm power switch remains turned on.

5. The driving device (100, 200) of claim 4, wherein in the first mode:
during a period when the first upper arm power switch is turned on, the first upper arm power switch, an equivalent inductor (L1, L2, L3, L12) between the first phase node and the second phase node, and the second lower arm power switch form a first transmission path for transmitting the driving power (PDR), and
during a period when the first upper arm power switch is turned off, the equivalent inductor (L1, L2, L3, L12), the second lower arm power switch, and the second bypass diode transmission form a second transmission path through which the equivalent inductor (L1, L2, L3, L12) provides the inductive power (PSE, EA, EB, EC, EAB).

6. The driving device (100, 200) of claim 3, wherein in the second mode:
the first upper arm power switch remains turned off,
the first lower arm power switch performs a switch operation based on a duty cycle of the second switch signal (SSW2),
the second upper arm power switch performs a switch operation based on a duty cycle of the third switch signal, wherein the third switch signal is the same as the second switch signal (SSW2), and
the second lower arm power switch remains turned off.

7. The driving device (100, 200) of claim 6, wherein in the second mode:
during a period when the first lower arm power switch and the second upper arm power switch are turned on, the second upper arm power switch, an equivalent inductor (L1, L2, L3, L12) between the first phase node and the second phase node, and the first lower arm power switch form a third transmission path for transmitting a reverse phase excitation power of the equivalent inductor (L1, L2, L3, L12), and
during a period when the first lower arm power switch and the second upper arm power switch are turned off, the equivalent inductor (L1, L2, L3, L12), the first bypass diode, and the third bypass diode form a fourth transmission path for transmitting the inductive power (PSE, EA, EB, EC, EAB) provided by the equivalent inductor (L1, L2, L3, L12).

8. The driving device (100, 200) of claim 3, wherein in the third mode:
the first upper arm power switch remains turned off,
the first lower arm power switch performs a switch operation based on a duty cycle of the second switch signal (SSW2),
the first upper arm power switch remains turned off, and
the second lower arm power switch remains turned off.

9. The driving device (100, 200) of claim 8, wherein in the third mode:
during a period when the first lower arm power switch is turned on, the first lower arm power switch, an equivalent inductor (L1, L2, L3, L12) between the first phase node and the second phase node, and the third bypass diode form a fifth transmission path for transmitting the inductive power (PSE, EA, EB, EC, EAB) provided by the equivalent inductor (L1, L2, L3, L12), and
during a period when the first lower arm power switch is turned off, the equivalent inductor (L1, L2, L3, L12), the first bypass diode, and the third bypass diode form a sixth transmission path for transmitting the inductive power (PSE, EA, EB, EC, EAB) provided by the equivalent inductor (L1, L2, L3, L12).

10. The driving device (100, 200) of claim 1, wherein:
the control circuit (130, 230) senses a feedback current value (IB) provided by the battery module (110),
when the feedback current value (IB) is greater than or equal to a protection current value (IS), the control circuit (130, 230) controls the transducer (120) to stop running, and
when the feedback current value (IB) is less than the protection current value (IS), the control circuit (130, 230) determines a phase change (PH) of the motor (MTR).

11. The driving device (100, 200) of claim 1, wherein:
the control circuit (130, 230) senses a moving speed (SP) of the electric auxiliary vehicle (10, 20), and
when the moving speed (SP) is greater than or equal to a set speed (SS), the control circuit (130, 230) controls the transducer (120) to enter the third mode.

12. The driving device (100, 200) of claim 11, wherein:
when the moving speed (SP) is less than the set speed (SS), the control circuit (130, 230) detects a torque value (TQ) applied by the user to the electric auxiliary vehicle (10, 20),
when the torque value (TQ) is greater than or equal to a set torque value (TS), the control circuit (130, 230) controls the transducer (120) to enter the first mode, and
when the torque value (TQ) is less than the set torque value (TS), the control circuit (130, 230) controls the transducer (120) to enter the third mode.

13. A driving method for driving an electric auxiliary vehicle (10, 20), wherein the electric auxiliary vehicle (10, 20) comprises a motor (MTR), a battery module (110), and a transducer (120), the battery module (110) stores a driving power (PDR), and the driving method comprises:
starting the electric auxiliary vehicle (10, 20);
determining a received command;
controlling the transducer (120) to enter a first mode when an acceleration command (IT1) is received, so that the transducer (120) provides the driving power (PDR) to the motor (MTR) in the first mode;
controlling the transducer (120) to enter a second mode when a brake command (IT2) is received, so that the transducer (120) provides an inductive power (PSE, EA, EB, EC, EAB) generated by the motor (MTR) to the battery module (110) in the second mode; and
controlling the transducer (120) to enter a third mode when the acceleration command (IT1) and the brake command (IT2) are not received and a user does not apply an acceleration force to the electric auxiliary vehicle (10, 20), so that the transducer (120) provides the inductive power (PSE, EA, EB, EC, EAB) generated by the motor (MTR) to the battery module (110) in the third mode.

14. The driving method of claim 13, wherein the battery module (110) is an aluminum-ion battery.

15. The driving method of claim 13, further comprising:
sensing a feedback current value (IB) provided by the battery module (110);
controlling the transducer (120) to stop running when the feedback current value (IB) is greater than or equal to a protection current value (IS); and
determining a phase change (PH) of the motor (MTR) when the feedback current value (IB) is less than the protection current value (IS).

16. The driving method of claim 13, further comprising:
sensing a moving speed (SP) of the electric auxiliary vehicle (10, 20); and
controlling the transducer (120) to enter the third mode when the moving speed (SP) is greater than or equal to a set speed (SS).

17. The driving method of claim 16, further comprising:
detecting a torque value (TQ) applied by the user to the electric auxiliary vehicle (10, 20) when the moving speed (SP) is less than the set speed (SS),
controlling the transducer (120) to enter the first mode when the torque value (TQ) is greater than or equal to a set torque value (TS), and
controlling the transducer (120) to enter the third mode when the torque value (TQ) is less than the set torque value (TS).
